# EUROPÄISCHE PATENTSCHRIFT

(11) **EP 2 555 933 B1**
(45) Veröffentlichungstag und Bekanntmachung des Hinweises auf die Patenterteilung: **22.01.2014**
(21) Anmeldenummer: 11713283.7
(22) Anmeldetag: 08.04.2011
(51) Int. Cl.: B60K 1/04, H01M 2/10

(54) **BEFESTIGUNGSVORRICHTUNG**
FASTENING DEVICE
DISPOSITIF DE FIXATION

(30) Priorität: 09.04.2010 US 322289 P; 08.04.2010 US 321936 P
(43) Veröffentlichungstag der Anmeldung: 13.02.2013
(73) Patentinhaber: MAGNA STEYR Fahrzeugtechnik AG & Co KG, 8041 Graz (AT)
(72) Erfinder: AUER, Thomas, A-9363 Metnitz (AT); RODLER, Martin, A-8160 Krottendorf (AT)
(74) Vertreter: Rausch, Gabriele
(86) Internationale Anmeldenummer: PCT/EP2011/055544
(87) Internationale Veröffentlichungsnummer: WO 2011/124700

(56) Entgegenhaltungen:
- WO-A1-2010/015777
- FR-A1- 2 798 342
- FR-A1- 2 880 476
- JP-A- 2001 088 563

## Beschreibung

Die vorliegende Erfindung betrifft eine Befestigungsvorrichtung zum lösbaren Befestigen eines elektrischen Energiespeichers an einer Tragstruktur eines Kraftfahrzeugs, insbesondere eines Elektrofahrzeugs oder Hybridfahrzeugs.

Elektrofahrzeuge oder Hybridfahrzeuge weisen einen elektrischen Antriebsmotor auf, der ein Drehmoment auf die Fahrzeugräder überträgt. Die Energie zum Betrieb des elektrischen Antriebsmotors wird dem Energiespeicher entnommen, bei welchem es sich insbesondere um eine wiederaufladbare Batterie, d.h. einen Akkumulator handeln kann. Üblicherweise umfasst eine derartige Batterie eine Anordnung von galvanischen Zellen, welche in einem Gehäuse untergebracht sind. Die Batterie kann beispielsweise am Tragrahmen des Kraftfahrzeugs angeschraubt sein.

Wenn an dem Fahrzeug ein Batteriewechsel vorzunehmen ist, muss die Verschraubung zwischen der Batterie und dem Fahrzeug gelöst und nach Entnahme der bisherigen Batterie eine Ersatzbatterie angeschraubt werden. Aufgrund des Gewindeverschleißes kann sich die Zuverlässigkeit der Schraubverbindung insbesondere bei häufigen Auswechselvorgängen verschlechtern. Weiterhin erfordert eine Verschraubung mit sicherheitskritischem Charakter einen relativ hohen Montageaufwand, z.B. in Form einer besonders ausführlichen Dokumentation.

Aus der FR 2 880 476 A1 ist eine gattungsgemäße Befestigungsvorrichtung bekannt.

Es ist eine Aufgabe der Erfindung, das lösbare Befestigen eines Energiespeichers am Tragrahmen eines Kraftfahrzeugs einfacherer und sicherer zu gestalten.

Die Lösung der Aufgabe erfolgt durch eine Befestigungsvorrichtung mit den Merkmalen des Anspruchs 1.

Erfindungsgemäß umfasst eine Befestigungsvorrichtung einen Haltevorsprung und eine Sperrklinke, die an dem Energiespeicher und an der Tragstruktur vorgesehen sind oder umgekehrt, wobei zum Befestigen des Energiespeichers an der Tragstruktur eine Relativbewegung des Haltevorsprungs zu der Sperrklinke entlang einer Bewegungsbahn in Richtung einer Endposition vorgesehen ist, wobei die Sperrklinke derart um eine Schwenkachse zwischen einer Freigabestellung und einer Sperrstellung verschwenkbar ist, dass die Sperrklinke sich in der Freigabestellung außerhalb der Bewegungsbahn des Haltevorsprungs befindet und dass die Sperrklinke in der Sperrstellung in die Bewegungsbahn des Haltevorsprungs hineinragt und dort, wenn sich der Haltevorsprung in der Endposition befindet, den Haltevorsprung hintergreift, wobei die Sperrklinke einen Stützabschnitt aufweist, der an dem Haltevorsprung anliegt, wenn sich der Haltevorsprung in der Endposition befindet und die Sperrklinke sich in der Sperrstellung befindet.

Die Bewegungsbahn kann geradlinig sein. Die Bewegungsrichtung verläuft dabei vorzugsweise vertikal, beispielsweise indem ein Energiespeicher mit Haltevorsprung von unten an die Tragstruktur des Fahrzeugs herangeführt wird. Prinzipiell kann die Bewegungsbahn auch gekrümmt, insbesondere kreisförmig, sein. Eine kreisförmige Bewegungsbahn liegt beispielsweise vor, wenn der Energiespeicher an einer Stelle der Tragstruktur eingehängt und anschließend verschwenkt wird. Unter der Bewegungsbahn des Haltevorsprungs ist grundsätzlich die Projektion des Haltevorsprungs entlang der Bewegungsrichtung zu verstehen. Wesentlich ist hierbei ausschließlich die Relativbewegung zwischen dem Haltevorsprung und der Sperrklinke, d.h. es kann auch sein, dass die Sperrklinke am Energiespeicher und der Haltevorsprung an der Tragstruktur vorgesehen ist. Aufgrund des Hintergreifens des Haltevorsprungs durch die Sperrklinke ergibt sich eine sichere, formschlüssige Verbindung zwischen dem Energiespeicher und dem Fahrzeugrahmen. Ein Auswechseln des Energiespeichers ist auf einfache und schnelle Weise möglich, da lediglich die Sperrklinke zu verschwenken ist. Die Sperrklinke weist einen Stützabschnitt auf, der an dem Haltevorsprung anliegt, wenn sich der Haltevorsprung in der Endposition befindet und die Sperrklinke sich in der Sperrstellung befindet.

Weiterbildungen der Erfindung sind in den abhängigen Ansprüchen, der Beschreibung sowie den beigefügten Zeichnungen angegeben.

Gemäß einer Ausführungsform der Erfindung ist die Schwenkachse der Sperrklinke außerhalb der Bewegungsbahn des Haltevorsprungs angeordnet und bezüglich der Endposition des Haltevorsprungs zurückversetzt, d.h. in Bewegungsrichtung des Haltevorsprungs gesehen hinter der Endposition angeordnet. Somit kann der Haltevorsprung an der Sperrklinke vorbeibewegt werden und die Sperrklinke kann in der entsprechenden Schwenkstellung den Haltevorsprung hintergreifen, wenn sich dieser an der Endposition befindet.

Der Abstand des Stützabschnitts von der Schwenkachse der Sperrklinke ist bevorzugt größer als die Tiefe des Haltevorsprungs, d.h. als der Abstand der Spitze des Haltevorsprungs von dem Ansatz des Haltevorsprungs an dem Energiespeicher bzw. der Tragstruktur. Somit ist der Schwenkradius der Sperrklinke relativ groß, wodurch aufgrund des Hebeleffekts ein effektives und zuverlässiges Sperren ermöglicht wird.

Alternativ oder zusätzlich kann die Sperrklinke einen Stützabschnitt aufweisen, der an dem Haltevorsprung anliegt, wenn sich der Haltevorsprung in der Endposition befindet und die Sperrklinke sich in der Sperrstellung befindet, wobei der Stützabschnitt bezüglich der Schwenkachse der Sperrklinke im Wesentlichen tangential ausgerichtet ist, d.h. im Wesentlichen der Tangente an einer Kreisbahn um die Schwenkachse folgend. Bei einer derartigen tangentialen Ausrichtung des Stützabschnitts ist lediglich ein minimaler Hub über die Endposition hinaus erforderlich, um die Sperrklinke in die Freigabestellung zurückzuschwenken. Vorzugsweise ist der Stützabschnitt konvex gekrümmt, um ein Vorbeibewegen der Sperrklinke am Haltevorsprung beim Schwenken aus der hintergreifenden Stellung zu ermöglichen.

Gemäß einer weiteren Ausführungsform der Erfindung ist der Haltevorsprung (insbesondere die mit der Sperrklinke zusammenwirkende Fläche) relativ zu seiner Bewegungsbahn schräg ausgerichtet. Eine derartige schräge Ausrichtung unterstützt eine verkeilende Wirkung der Sperrklinke.

Vorzugsweise ist die Sperrklinke in die Sperrstellung vorgespannt. Dadurch kann ein selbsttätiges Einrasten des Energiespeichers bei dessen Positionierung an der Tragstruktur erfolgen.

Weiterhin kann an dem Haltevorsprung eine Auflaufschräge zum temporären Zurückdrängen der Sperrklinke in die Freigabestellung vorgesehen sein. Eine derartige Auflaufschräge, welche vorzugsweise vollständig um eine Stirnseite des Energiespeichers umläuft, erleichtert das Einführen des Energiespeichers in seine Halterung, indem sie ein leichteres Wegdrücken der Sperrklinke in die Freigabestellung beim Vorbeibewegen des Haltevorsprungs an der Sperrklinke ermöglicht. Darüber hinaus kann eine Auflaufschräge auch allgemein als Einführhilfe dienen, wenn der Energiespeicher beispielsweise in einem Aufnahmeraum unterzubringen ist.

Die Befestigungsvorrichtung kann eine Entriegelungseinrichtung umfassen, mittels derer die Sperrklinke in die Freigabestellung schwenkbar ist. Vorzugsweise ist die Entriegelungseinrichtung derart gestaltet, dass ein Verschwenken der Sperrklinke in die Freigabestellung von einem Ort aus möglich ist, welcher außerhalb der Bewegungsbahn des Haltevorsprungs liegt. Nach einem Betätigen der Entriegelungseinrichtung ist somit ein ungehindertes Vorbeibewegen des Haltevorsprungs an der Sperrklinke möglich.

Die Entriegelungseinrichtung kann einen schwenkbaren Hebel umfassen, welcher bei einem Emporschwenken eines Hebelarms die Sperrklinke in die Freigabestellung schwenkt. Ein Zurückschwenken der Sperrklinke kann prinzipiell aufgrund der Schwerkraft selbsttätig erfolgen, wodurch die Bedienung weiter vereinfacht wird.

Die Entriegelungseinrichtung kann ferner einen geradlinig versetzbaren Keil mit einer Schrägfläche umfassen, welcher dazu ausgebildet ist, bei einer Entriegelungsbewegung mittels der Schrägfläche gegen einen Klinkenarm der Sperrklinke zu drücken und die Sperrklinke dadurch in die Freigabestellung zu schwenken. Die Betätigung der Entriegelungseinrichtung kann auf diese Weise besonders einfach gestaltet werden.

Die Schrägfläche des Keils kann insbesondere mit einer an dem Klinkenarm drehbar gelagerten Andrückrolle zusammenwirken. Eine derartige Andrückrolle vermindert den Reibungswiderstand und ermöglicht so eine leichtere Betätigung der Entriegelungseinrichtung.

Die Befestigungsvorrichtung kann weiterhin einen Sensor zum Erfassen der Schwenkstellung der Sperrklinke umfassen. Gemäß einer Ausführungsform ist als Sensor ein Mikroschalter vorgesehen, welcher das Erreichen der Freigabestellung und/oder der Sperrstellung der Sperrklinke anzeigt. Auf diese Weise kann ein Verifizieren der Verriegelung zwischen dem Energiespeicher und dem Fahrzeug erfolgen, was insbesondere aus Sicherheitsgründen wünschenswert sein kann.

Die Erfindung betrifft ferner ein Befestigungssystem mit wenigstens einer Befestigungsvorrichtung wie vorstehend erläutert und mit einer Tragstruktur, die einen Aufnahmeraum für einen elektrischen Energiespeicher bildet. Die Sperrklinke der Befestigungsvorrichtung kann dabei insbesondere an einem Seitenabschnitt der Tragstruktur vorgesehen sein.

Das Befestigungssystem kann mehrere Befestigungsvorrichtungen umfassen, wobei wenigstens zwei Sperrklinken an einander gegenüberliegenden Seitenabschnitten der Tragstruktur vorgesehen sind. Die Sperrklinken sind vorzugsweise derart ausgebildet, dass der Energiespeicher ausschließlich durch die Sperrklinken in dem Aufnahmeraum gehalten wird. Zusätzliche Halterungsmaßnahmen sind somit nicht erforderlich, so dass eine besonders einfache Konstruktion ermöglicht wird.

Gemäß einer Ausgestaltung der Erfindung kann in der Gebrauchslage der Tragstruktur der Aufnahmeraum nach unten geöffnet sein. Zum Befestigen des Energiespeichers an der Tragstruktur wird dieser von unten in den Aufnahmeraum hineinbewegt. Dies kann z.B. mittels einer geeigneten Hubvorrichtung erfolgen.

An der Tragstruktur kann ferner wenigstens ein, insbesondere oberer, Anschlag für den Energiespeicher vorgesehen sein, wobei die jeweilige Sperrklinke derart angeordnet ist, dass der Energiespeicher an dem Anschlag anliegt, wenn die Sperrklinke in der Sperrstellung den Haltevorsprung hintergreift. Der Energiespeicher ist bei dieser Ausgestaltung nach dem Befestigungsvorgang zwischen dem oberen Anschlag und einem Stützabschnitt der Sperrklinke eingeklemmt, so dass eine sichere Befestigung des Energiespeichers gewährleistet ist und insbesondere ein unerwünschtes Spiel vermieden wird.

An dem Anschlag kann ein elastisch verformbares Dämpfungselement vorgesehen sein, um unerwünschte Geräusche und Schwingungen zu verringern.

Die Erfindung bezieht sich auch auf ein Energiespeichersystem für ein Kraftfahrzeug mit wenigstens einem elektrischen Energiespeicher und mit mehreren Befestigungsvorrichtungen der erläuterten Art, um den Energiespeicher an einer Tragstruktur des Kraftfahrzeugs zu befestigen.

Die Erfindung wird nachfolgend beispielhaft unter Bezugnahme auf die Zeichnungen beschrieben.
- Fig. 1: zeigt eine Tragstruktur eines Kraftfahrzeugs, an welcher ein elektrischer Energiespeicher mittels einer erfindungsgemäßen Befestigungsvorrichtung befestigt ist.
- Fig. 2: zeigt eine vergrößerte Teilansicht der Anordnung gemäß Fig. 1, welche eine Sperrklinke der Befestigungsvorrichtung genauer darstellt.
- Fig. 3: zeigt eine perspektivische Darstellung der Anordnung gemäß Fig. 2.
- Fig. 4: zeigt eine Ansicht eines Energiespeichers von unten, welche dessen Befestigung an einer Tragstruktur eines Kraftfahrzeugs mittels mehrerer Befestigungsvorrichtungen gemäß Fig. 2 verdeutlicht.
- Fig. 5 bis 8: zeigen verschiedene Phasen des Einführens eines Energiespeichers in einen durch die Tragstruktur gebildeten Aufnahmehohlraum.
- Fig. 9: zeigt eine perspektivische Ansicht einer Befestigungsvorrichtung gemäß einer alternativen Ausführungsform der Erfindung.
- Fig. 10: zeigt eine Seitenansicht der Befestigungsvorrichtung gemäß Fig. 9.

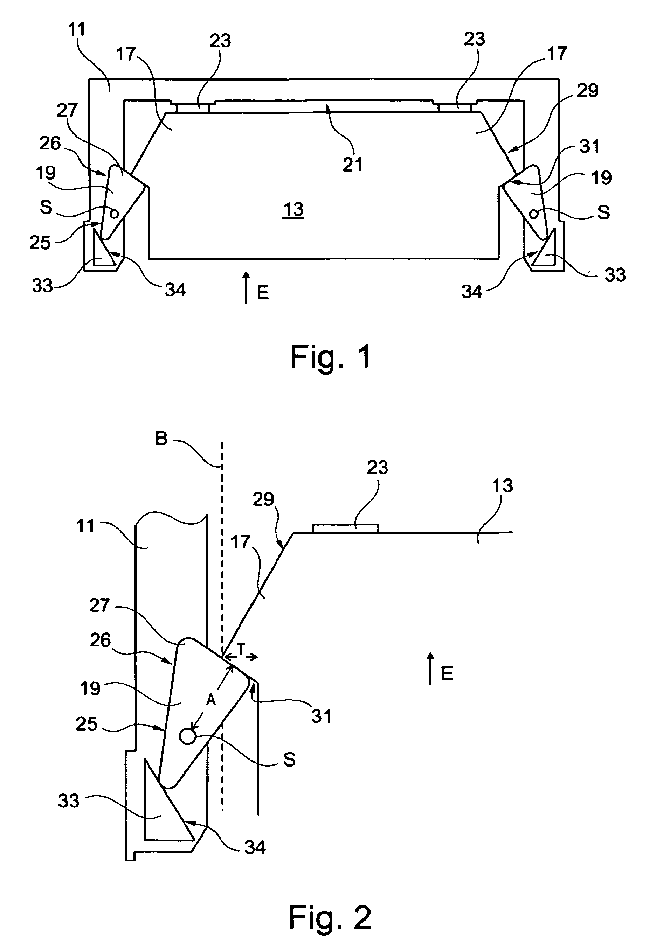

Gemäß Fig. 1 ist ein elektrischer Energiespeicher 13, bei dem es sich beispielsweise um eine wiederaufladbare Batterie handeln kann, an einer Tragstruktur 11 eines nicht näher dargestellten Kraftfahrzeugs befestigt. Die Tragstruktur 11 bildet dabei einen nach unten geöffneten Aufnahmeraum für den Energiespeicher 13, in welchen dieser in einer Einführrichtung E einführbar ist. Der Energiespeicher 13 weist ein im Wesentlichen quaderförmiges Gehäuse 15 auf, an welchem ein umlaufender Haltevorsprung 17 ausgebildet ist. Der Energiespeicher 13 liegt an einer oberen Anschlagfläche 21 der Tragstruktur 11 an, wobei elastische Dämpfungselemente 23 an der Anschlagfläche 21 vorgesehen sind, um Geräusche und Schwingungen zu verringern.

Nach unten ist der Energiespeicher 13 durch eine Anordnung von Sperrklinken 19 gesichert, welche sich in dem Haltevorsprung 17 verkeilen. Die Sperrklinken 19 sind gemäß Fig. 2 jeweils um eine quer zu der Einführrichtung E verlaufende Schwenkachse S verschwenkbar in der Tragstruktur 11 gelagert und weisen einen ersten Klinkenarm 25 sowie einen zweiten Klinkenarm 26 auf. Sie sind im Querschnitt keilförmig und weisen einen oberen, bezogen auf die Schwenkachse S konvex gewölbten Stützabschnitt 27 auf. Der Abstand A des Stützabschnitts 27 von der Schwenkachse S ist dabei größer als die Tiefe T des Haltevorsprungs 17.

Der Haltevorsprung 17 ist im Querschnitt dreieckförmig und weist eine auf die Einführrichtung E bezogen vordere Schrägfläche 29 und eine hintere Schrägfläche 31 auf. Die hintere Schrägfläche 31 ist derart geformt, dass sie bezogen auf die Schwenkachse S tangential zu dem Stützabschnitt 27 der Sperrklinke 19 verläuft. Ein Keil 33 mit einer Schrägfläche 34 ist parallel zu der Einführrichtung E verschiebbar in der Tragstruktur 11 gelagert und kann bei einer Verschiebung mit der Schrägfläche 34 derart auf den ersten Klinkenarm 25 der Sperrklinke 19 drücken, dass diese von der in Fig. 1 und 2 dargestellten Sperrstellung im Bild nach links in eine Freigabestellung geschwenkt wird.

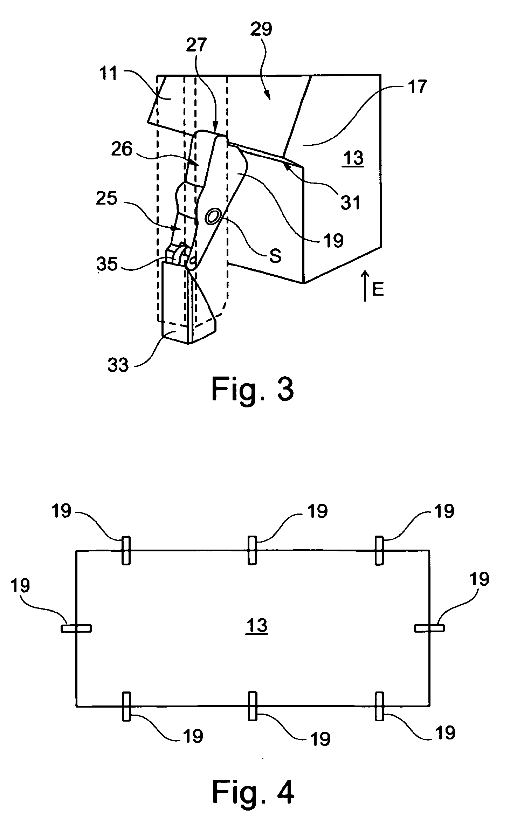

In der perspektivischen Darstellung der Sperrklinke 19 gemäß Fig. 3 ist eine Andrückrolle 35 erkennbar, welche am Ende des ersten Klinkenarms 25 vorgesehen ist, um den Reibungswiderstand zwischen dem ersten Klinkenarm 25 und der Schrägfläche 34 des Keils 33 zu verringern.

Fig. 4 zeigt beispielhaft eine Anordnung von acht Befestigungsvorrichtungen wie vorstehend beschrieben, welche jeweils an gegenüberliegenden Seiten des Aufnahmehohlraums vorgesehen sind und welche dazu dienen, den Energiespeicher ohne Verwendung zusätzlicher Halterungen in dem Aufnahmeraum zu fixieren.

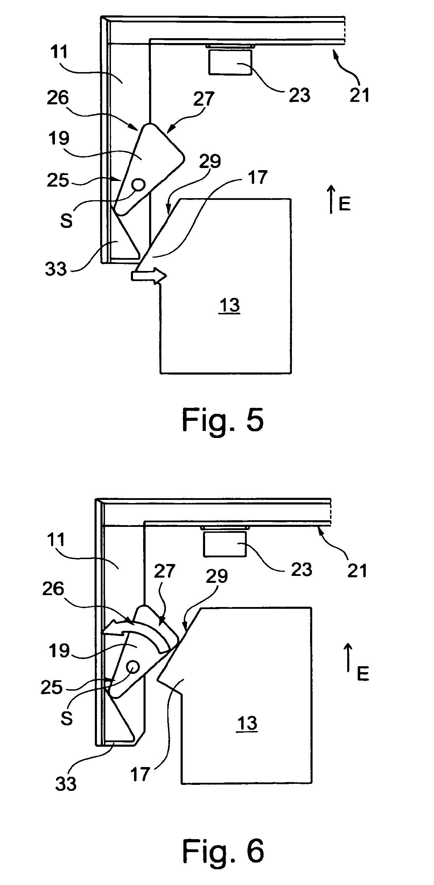

Das Befestigen eines Energiespeichers 13 in einem durch die Tragstruktur 11 gebildeten Aufnahmeraum wird nachfolgend unter Bezugnahme auf die Fig. 5 bis 8 näher erläutert. Der Energiespeicher 13 wird zunächst grob vorpositioniert und mittels einer nicht dargestellten Hubvorrichtung, beispielsweise einem angetriebenen Hubtisch, entlang der Einführrichtung E bewegt. Sofern der Energiespeicher 13 dabei nicht exakt mit der Einführöffnung des Aufnahmeraums fluchtet, gelangt die vordere Schrägfläche 29 des Haltevorsprungs 17 an die Begrenzung des Aufnahmeraums, wodurch der Energiespeicher 13 zentrierend bewegt wird, was in Fig. 5 durch einen Pfeil dargestellt ist. Um ein leichteres Zentrieren des Energiespeichers 13 zu gewährleisten, kann dieser auf einer reibungsmindernden Auflage der Hubvorrichtung oder schwimmend gelagert sein.

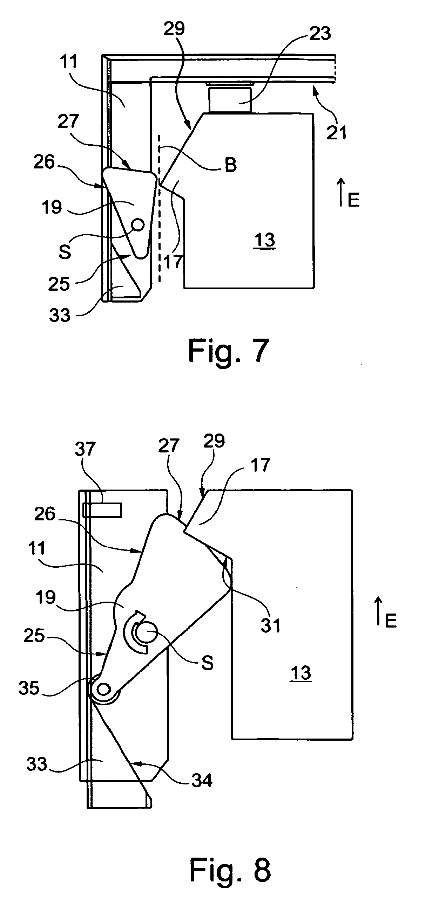

Bei einem Weiterbewegen des Energiespeichers 13 entlang der Einführrichtung E beschreibt der Haltevorsprung 17 eine parallel zur Einführrichtung E verlaufende Bewegungsbahn B, weshalb die vordere Schrägfläche 29 in Kontakt mit dem zweiten Klinkenarm 26 der Sperrklinke 19 gerät, falls diese sich in der Sperrstellung befindet. Der zweite Klinkenarm 26 wird in der Folge wie in Fig. 6 dargestellt nach links verschwenkt, wodurch sich die Sperrklinke 19 in die in Fig. 7 dargestellte Freigabestellung bewegt, in welcher sie sich außerhalb der Bewegungsbahn B des Haltevorsprungs 17 befindet. Der Energiespeicher 13 wird dann solange entlang der Einführrichtung E weiterbewegt, bis er an der oberen Anschlagfläche 21 der Tragstruktur 11 anschlägt.
Die Bewegungsbahn B ist bei dem dargestellten Ausführungsbeispiel geradlinig. Sie kann bei anderen Ausgestaltungen der Erfindung jedoch auch eine Krümmung aufweisen und insbesondere kreisförmig sein.

Der Haltevorsprung 17 ist derart angeordnet und dimensioniert, dass sich gleichzeitig mit dem Anschlagen des Energiespeichers 13 an der oberen Anschlagfläche 21 die vordere Schrägfläche 29 des Haltevorsprungs 17 ausreichend weit an der Sperrklinke 19 vorbei bewegt hat, dass diese aufgrund einer Federvorspannung wieder zurück in die Sperrstellung schwenken kann, wie dies in Fig. 8 dargestellt ist. In dieser Stellung ist der Energiespeicher 13 zwischen den Dämpfungselementen 23 und dem Stützabschnitt 27 der Sperrklinke 19 eingekeilt, weshalb eine sichere Befestigung des Energiespeichers 13 am Fahrzeug gewährleistet ist. Ein in Fig. 8 lediglich schematisch dargestellter Mikroschalter 37 detektiert dabei das Erreichen der Sperrstellung durch die Sperrklinke 19 und meldet diesen Zustand an eine nicht dargestellte Steuereinrichtung des Fahrzeugs.

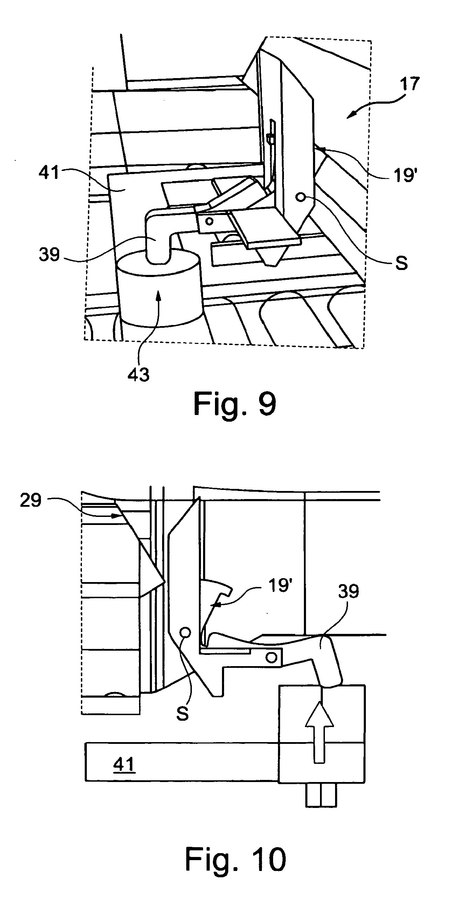

Die Fig. 9 und 10 zeigen eine alternative Ausführungsform einer erfindungsgemäßen Befestigungsvorrichtung, wobei zum Entriegeln der Sperrklinke 19' ein zusätzlicher Betätigungshebel 39 vorgesehen ist, der durch die Hubvorrichtung 41 betätigbar ist. Gemäß Fig. 10 drückt ein Vorsprung 43 der Hubvorrichtung 41 beim Anheben des Energiespeichers 13 auf den Betätigungshebel 39 und drückt dabei die Sperrklinke 19' in die Freigabestellung. Der derart vom Fahrzeug gelöste Energiespeicher 13 gelangt dabei auf die Auflagefläche der Hubvorrichtung 41 und kann anschließend abgesenkt und entfernt werden. Das Befestigen eines neuen Energiespeichers 13 erfolgt wie vorstehend beschrieben, wobei die Schritte in der umgekehrten Reihenfolge durchgeführt werden.

Insgesamt ermöglicht eine erfindungsgemäße Befestigungsvorrichtung einen schnellen und einfachen Batteriewechsel bei Kraftfahrzeugen mit elektrischem Antriebsmotor, wobei insbesondere verschleißbedingte Beeinträchtigungen der Halterung vermieden werden.

### Bezugszeichenliste

- 11: Tragstruktur
- 13: Energiespeicher
- 17: Haltevorsprung
- 19, 19': Sperrklinke
- 21: Anschlagfläche
- 23: Dämpfungselement
- 25: erster Klinkenarm
- 26: zweiter Klinkenarm
- 27: Stützabschnitt
- 29: vordere Schrägfläche
- 31: hintere Schrägfläche
- 33: Keil
- 34: Schrägfläche
- 35: Andrückrolle
- 37: Mikroschalter
- 39: Betätigungshebel
- 41: Hubvorrichtung
- 43: Vorsprung

- E: Einführrichtung
- B: Bewegungsbahn
- S: Schwenkachse
- A: Abstand
- T: Tiefe

## Patentansprüche

1. Befestigungsvorrichtung zum lösbaren Befestigen eines elektrischen Energiespeichers (13) an einer Tragstruktur (11) eines Kraftfahrzeugs, insbesondere eines Hybridfahrzeugs oder Elektrofahrzeugs, mit einem Haltevorsprung (17) und einer Sperre (19, 19'), die an dem Energiespeicher (13) und an der Tragstruktur (11) vorgesehen sind oder umgekehrt, wobei zum Befestigen des Energiespeichers (13) an der Tragstruktur (11) eine Relativbewegung des Haltevorsprungs (17) zu der Sperre (19) entlang einer Bewegungsbahn (B) in Richtung einer Endposition vorgesehen ist, **dadurch gekennzeichnet, dass** die Sperre eine Sperrklinke (19, 19') ist und derart um eine Schwenkachse (S) zwischen einer Freigabestellung und einer Sperrstellung verschwenkbar ist, dass die Sperrklinke (19, 19') sich in der Freigabestellung außerhalb der Bewegungsbahn des Haltevorsprungs (17) befindet und dass die Sperrklinke (19, 19') in der Sperrstellung in die Bewegungsbahn des Haltevorsprungs (17) hineinragt und dort, wenn sich der Haltevorsprung (17) in der Endposition befindet, den Haltevorsprung (17) hintergreift, wobei die Sperrklinke (19, 19') einen Stützabschnitt (27) aufweist, der an dem Haltevorsprung (17) anliegt, wenn sich der Haltevorsprung (17) in der Endposition befindet und die Sperrklinke (19, 19') sich in der Sperrstellung befindet.

2. Befestigungsvorrichtung nach Anspruch 1,
wobei die Schwenkachse (S) der Sperrklinke (19, 19') außerhalb der Bewegungsbahn (B) des Haltevorsprungs (17) angeordnet und bezüglich der Endposition des Haltevorsprungs (17) zurückversetzt ist.

3. Befestigungsvorrichtung nach Anspruch 1 oder 2,
wobei der Abstand (A) des Stützabschnitts (27) von der Schwenkachse (S) der Sperrklinke (19, 19') größer ist als die Tiefe (T) des Haltevorsprungs (17).

4. Befestigungsvorrichtung nach zumindest einem der vorstehenden Ansprüche,
wobei die Sperrklinke (19, 19') einen Stützabschnitt (27) aufweist, der an dem Haltevorsprung (17) anliegt, wenn sich der Haltevorsprung (17) in der Endposition befindet und die Sperrklinke (19, 19') sich in der Sperrstellung befindet, wobei der Stützabschnitt (27) bezüglich der Schwenkachse (S) der Sperrklinke (19, 19') im Wesentlichen tangential ausgerichtet ist.

5. Befestigungsvorrichtung nach zumindest einem der vorstehenden Ansprüche,
wobei der Haltevorsprung (17) relativ zu seiner Bewegungsbahn (B) schräg ausgerichtet ist.

6. Befestigungsvorrichtung nach zumindest einem der vorstehenden Ansprüche,
wobei die Sperrklinke (19, 19') in die Sperrstellung vorgespannt ist.

7. Befestigungsvorrichtung nach zumindest einem der vorstehenden Ansprüche,
wobei an dem Haltevorsprung (17) eine Auflaufschräge (29) zum temporären Zurückdrängen der Sperrklinke (19, 19') in die Freigabestellung vorgesehen ist.

8. Befestigungsvorrichtung nach zumindest einem der vorstehenden Ansprüche,
wobei die Befestigungsvorrichtung eine Entriegelungseinrichtung (33, 39) umfasst, mittels derer die Sperrklinke (19, 19') in die Freigabestellung schwenkbar ist.

9. Befestigungsvorrichtung nach Anspruch 8,
wobei die Entriegelungseinrichtung einen schwenkbaren Hebel (39) umfasst, welcher bei einem Emporschwenken eines Hebelarms die Sperrklinke (19') in die Freigabestellung schwenkt.

10. Befestigungsvorrichtung nach Anspruch 8,
wobei die Entriegelungseinrichtung einen geradlinig versetzbaren Keil (33) mit einer Schrägfläche (34) umfasst, welcher dazu ausgebildet ist, bei einer Entrieglungsbewegung mittels der Schrägfläche (34) gegen einen Klinkenarm (25) der Sperrklinke zu drücken und die Sperrklinke dadurch in die Freigabestellung zu schwenken.

11. Befestigungsvorrichtung nach Anspruch 10,
wobei die Schrägfläche (34) des Keils (33) mit einer an dem Klinkenarm (25) drehbar gelagerten Andrückrolle (35) zusammenwirkt.

12. Befestigungsvorrichtung nach zumindest einem der vorstehenden Ansprüche,
wobei die Befestigungsvorrichtung einen Sensor (37) zum Erfassen der Schwenkstellung der Sperrklinke (19, 19') umfasst.

13. Befestigungssystem mit wenigstens einer Befestigungsvorrichtung nach einem der vorhergehenden Ansprüche und mit einer Tragstruktur (11), die einen Aufnahmeraum für einen elektrischen Energiespeicher (13) bildet.

14. Befestigungssystem nach Anspruch 13,
wobei das Befestigungssystem mehrere Befestigungsvorrichtungen umfasst, wobei wenigstens zwei Sperrklinken (19, 19') an einander gegenüberliegenden Seitenabschnitten der Tragstruktur (11) vorgesehen sind.

15. Befestigungssystem nach Anspruch 13 oder 14,
wobei an der Tragstruktur (11) wenigstens ein, insbesondere oberer, Anschlag (21) für den Energiespeicher (13) vorgesehen ist, wobei die jeweilige Sperrklinke (19, 19') derart angeordnet ist, dass der Energiespeicher (13) an dem Anschlag (21) anliegt, wenn die Sperrklinke (19, 19') in der Sperrstellung den Haltevorsprung (17) hintergreift.

## Claims

1. Fixing device for releasable fixing of an electrical energy accumulator (13) to a carrying structure (11) of a motor vehicle, in particular a hybrid or electric vehicle, with a retaining protrusion (17) and a lock (19, 19') which are provided on the energy accumulator (13) and on the carrying structure (11) or vice versa, wherein to fix the energy accumulator (13) to the carrying structure (11), a relative movement of the retaining protrusion (17) to the lock (19) is provided along a movement track (B) in the direction of an end position, **characterized in that** the lock is a locking catch (19, 19') and can be swiveled about a swivel axis (S) between a release position and a locked position such that in the release position the locking catch (19, 19') is outside the movement track of the retaining protrusion (17) and in the locked position the locking catch (19, 19') protrudes into the movement track of the retaining protrusion (17) and there engages behind the retaining protrusion (17) when the retaining protrusion (17) is in the end position, wherein the locking catch (19, 19') comprises a supporting segment (27) which lies on the retaining protrusion (17) when the retaining protrusion (17) is in the end position and the locking catch (19, 19') is in the locked position.

2. Fixing device according to Claim 1,
wherein the swivel axis (S) of the locking catch (19, 19') is arranged outside the movement track (B) of the retaining protrusion (17) and is set back in relation to the end position of the retaining protrusion (17).

3. Fixing device according to Claim 1 or 2,
wherein the distance (A) of the supporting segment (27) from the swivel axis (S) of the locking catch (19, 19') is greater than the depth (T) of the retaining protrusion (17).

4. Fixing device according to at least one of the preceding claims, wherein the locking catch (19, 19') comprises a supporting segment (27) which lies on the retaining protrusion (17) when the retaining protrusion (17) is in the end position and the locking catch (19, 19') is in the locked position, wherein the supporting segment (27) is oriented substantially tangentially in relation to the swivel axis (S) of the locking catch (19, 19').

5. Fixing device according to at least one of the preceding claims, wherein the retaining protrusion (17) is oriented obliquely in relation to its movement track (B).

6. Fixing device according to at least one of the preceding claims, wherein the locking catch (19, 19') is pretensioned in the locked position.

7. Fixing device according to at least one of the preceding claims, wherein on the retaining protrusion (17) is provided a run-up chamfer (29) for temporarily pressing back the locking catch (19, 19') into the release position.

8. Fixing device according to at least one of the preceding claims, wherein the fixing device comprises an unlocking device (33, 39), by means of which the locking catch (19, 19') can be swiveled into the release position.

9. Fixing device according to Claim 8,
wherein the unlocking device comprises a swivelable lever (39) which, when a lever arm is swiveled up, swivels the locking catch (19') into the release position.

10. Fixing device according to Claim 8,
wherein the unlocking device comprises a linearly displaceable wedge (33) with a chamfer surface (34) which is adapted, on an unlocking movement, to press by means of the chamfer surface (34) against a latching arm (25) of the locking catch and hence swivel the locking catch into the release position.

11. Fixing device according to Claim 10,
wherein the chamfer surface (34) of the wedge (33) cooperates with a contact roller (35) mounted rotatably on the latching arm (25).

12. Fixing device according to at least one of the preceding claims, wherein the fixing device comprises a sensor (37) to detect the swivel position of the locking catch (19, 19').

13. Fixing system with at least one fixing device according to any of the preceding claims and with a carrying structure (11) which forms a receiving chamber for an electrical energy accumulator (13).

14. Fixing system according to Claim 13,
wherein the fixing system comprises several fixing devices, wherein at least two locking catches (19, 19') are provided on opposing side segments of the carrying structure (11).

15. Fixing system according to Claim 13 or 14,
wherein on the carrying structure (11) is provided at least one in particular upper stop (21) for the energy accumulator (13), wherein the respective locking catch (19, 19') is arranged such that the energy accumulator (13) lies against the stop (21) when the locking catch (19, 19') engages behind the retaining protrusion (17) in the locked position.

## Revendications

1. Dispositif de fixation pour fixer de manière amovible un accumulateur d'énergie électrique (13) sur une structure de support (11) d'un véhicule automobile, en particulier d'un véhicule hybride ou d'un véhicule électrique, comprenant une saillie de retenue (17) et un élément de blocage (19, 19') qui sont prévus sur l'accumulateur d'énergie (13) et sur la structure de support (11) ou inversement, un déplacement relatif de la saillie de retenue (17) par rapport à l'élément de blocage (19) le long d'une trajectoire de déplacement (B) en direction d'une position finale étant prévu pour fixer l'accumulateur d'énergie (13) sur la structure de support (11), **caractérisé en ce que** l'élément de blocage est un cliquet de blocage (19, 19') et peut être pivoté autour d'un axe de pivotement (S) entre une position de libération et une position de blocage, de telle sorte que le cliquet de blocage (19, 19') se trouve, dans la position de libération, à l'extérieur de la trajectoire de déplacement de la saillie de retenue (17) et que le cliquet de blocage (19, 19') fasse saillie, dans la position de blocage, dans la trajectoire de déplacement de la saillie de retenue (17), et y vienne en prise par l'arrière avec la saillie de retenue (17) lorsque la saillie de retenue (17) se trouve dans la position finale, le cliquet de blocage (19, 19') comprenant une partie d'appui (27) qui s'applique contre la saillie de retenue (17) lorsque la saillie de retenue (17) se trouve dans la position finale et que le cliquet de blocage (19, 19') se trouve dans la position de blocage.

2. Dispositif de fixation selon la revendication 1, dans lequel l'axe de pivotement (S) du cliquet de blocage (19, 19') est situé à l'extérieur de la trajectoire de déplacement (B) de la saillie de retenue (17) et est en retrait par rapport à la position finale de la saillie de retenue (17).

3. Dispositif de fixation selon la revendication 1 ou 2,
dans lequel la distance (A) de la partie d'appui (27) à l'axe de pivotement (S) du cliquet de blocage (19, 19') est supérieure à la profondeur (T) de la saillie de retenue (17).

4. Dispositif de fixation selon au moins l'une quelconque des revendications précédentes,
dans lequel le cliquet de blocage (19, 19') comprend une partie d'appui (27) qui s'applique contre la saillie de retenue (17) lorsque la saillie de retenue (17) se trouve dans la position finale et que le cliquet de blocage (19, 19') se trouve dans la position de blocage, la partie d'appui (27) étant orientée essentiellement tangentiellement par rapport à l'axe de pivotement (S) du cliquet de blocage (19, 19').

5. Dispositif de fixation selon au moins l'une quelconque des revendications précédentes,
dans lequel la saillie de retenue (17) est orientée de manière oblique par rapport à sa trajectoire de déplacement (B).

6. Dispositif de fixation selon au moins l'une quelconque des revendications précédentes,
dans lequel le cliquet de blocage (19, 19') est précontraint dans la position de blocage.

7. Dispositif de fixation selon au moins l'une quelconque des revendications précédentes,
dans lequel un biseau formant rampe (29) est prévu sur la saillie de retenue (17) pour repousser temporairement le cliquet de blocage (19, 19') dans la position de libération.

8. Dispositif de fixation selon au moins l'une quelconque des revendications précédentes,
dans lequel le dispositif de fixation comporte un dispositif de déverrouillage (33, 39) au moyen duquel le cliquet de blocage (19, 19') peut être pivoté dans la position de libération.

9. Dispositif de fixation selon la revendication 8, dans lequel le dispositif de déverrouillage comporte un levier pivotant (39), lequel pivote le cliquet de blocage (19') dans la position de libération lors d'un pivotement vers le haut d'un bras de levier.

10. Dispositif de fixation selon la revendication 8, dans lequel le dispositif de déverrouillage comporte un coin (33) pouvant être déplacé linéairement et pourvu d'une surface oblique (34), lequel coin est conçu pour appuyer sur un bras de cliquet (25) du cliquet de blocage au moyen de la surface oblique (34) lors d'un déplacement de déverrouillage et pour pivoter ainsi le cliquet de blocage dans la position de libération.

11. Dispositif de fixation selon la revendication 10, dans lequel la surface oblique (34) du coin (33) coopère avec un galet presseur (35) monté à rotation sur le bras de cliquet (25).

12. Dispositif de fixation selon au moins l'une quelconque des revendications précédentes,
dans lequel le dispositif de fixation comporte un capteur (37) pour détecter la position de pivotement du cliquet de blocage (19, 19').

13. Système de fixation comportant au moins un dispositif de fixation selon l'une quelconque des revendications précédentes et comportant une structure de support (11) qui forme un espace de réception pour un accumulateur d'énergie électrique (13).

14. Système de fixation selon la revendication 13,
le système de fixation comportant plusieurs dispositifs de fixation, au moins deux cliquets de blocage (19, 19') étant prévus sur des parties latérales opposées les unes aux autres de la structure de support (11).

15. Système de fixation selon la revendication 13 ou 14,
dans lequel il est prévu sur la structure de support (11) au moins une butée (21), de préférence supérieure, pour l'accumulateur d'énergie (13), et dans lequel le cliquet de blocage (19, 19') respectif est disposé de telle sorte que l'accumulateur d'énergie (13) s'applique contre la butée (21) lorsque le cliquet de blocage (19, 19') vient en prise par l'arrière avec la saillie de retenue (17) dans la position de blocage.
